# EUROPEAN PATENT SPECIFICATION

(11) **EP 0 694 680 B1**
(45) Date of publication and mention of the grant of the patent: **03.01.2001**
(21) Application number: 95111860.3
(22) Date of filing: 27.07.1995
(51) Int. Cl.: F01N 3/34

(54) **Internal combustion engine**
Brennkraftmaschine
Moteur à combustion interne

(30) Priority: 27.07.1994 JP 19602394
(43) Date of publication of application: 31.01.1996
(73) Proprietor: YAMAHA HATSUDOKI KABUSHIKI KAISHA, Iwata-shi Shizuoka-ken, 438 (JP)
(72) Inventor: Takeuchi, Yoshihiko, Iwata-shi, Shizuoka-ken (JP)
(74) Representative: Grünecker, Kinkeldey, Stockmair & Schwanhäusser Anwaltssozietät

(56) References cited:
- GB-A- 2 027 125
- US-A- 4 434 615
- PATENT ABSTRACTS OF JAPAN vol. 7, no. 193 (M-238), 24 August 1983 & JP-A-58 093916 (HONDA), 3 June 1983,
- PATENT ABSTRACTS OF JAPAN vol. 11, no. 135 (M-585), 28 April 1987 & JP-A-61 275518 (HONDA), 5 December 1986,

## Description

The present invention relates to an internal combustion engine, particularly for a motorcycle, comprising a cylinder with a combustion chamber defined therein, an intake passage arrangement for supplying intake air to said combustion chamber, and an exhaust passage arrangement for discharging combustion gas from said combustion chamber, a secondary air pipe arrangement for supplying air to said exhaust passage arrangement to clean said combustion gas, and valve means for opening and closing said secondary air pipe arrangement.

Known existing devices the above-mentioned type are disclosed in, for example, US-A-4 434 615 and Japanese published unexamined patent application No. 59-68514.

In such a device, there is provided a secondary air pipe having one end which is connected to an exhaust system of an internal combustion engine mounted on a body frame and the other end which opens to the atmosphere side, and a reed valve which permits a secondary air flowing through the secondary air pipe to pass therethrough only when the secondary air flows in the direction from the atmosphere side toward the exhaust system.

When the internal engine is operated, air in the atmosphere is fed as secondary air to the exhaust gas through the secondary air pipe and reed valve by the negative pressure created by the pulsed exhaustion in the exhaust system. Uncombusted substances such as hydrocarbons and carbon monoxide contained in the exhaust gas are thus completely combusted by oxidation with the secondary air so that cleaned exhaust gas is discharged to the atmosphere.

Since, in the conventional construction, a midway portion of the secondary air pipe downstream of the reed valve is bent and oriented downward, there arise the following problems.

The pressure inside the exhaust system becomes occasionally higher than the pressure in the secondary air pipe due to the pulsed exhaustion, so that the exhaust gas flows back toward the secondary air tube. Because of the presence of the reed valve, however, the exhaust gas is prevented from flowing back to the secondary air pipe located upstream of the reed valve. However, that portion of the secondary air pipe located down stream of the reed valve is apt to receive the backflow of the exhaust gas. When part of the exhaust gas is replaced for part of the secondary air in the secondary air pipe, the temperature of the exhaust gas is lowered to cause condensation thereof. The condensed liquid is thus accumulated in a midway of the secondary air pipe.

The accumulated liquid which is highly acidic causes erosion of the secondary air pipe and brings about a problem in the service life thereof.

To cope with this problem, there is an idea to dispose the reed valve near the exhaust system so as to shorten the secondary air pipe extending therebetween.

With this measure, however, the reed valve is heated with the exhaust gas from the exhaust system so that the service life of the valve element and the valve seat serving as a sealing member of the reed valve tends to be reduced.

The reed valve generates hitting sounds when it operates to permit the passage of the secondary air by repeated collision, in a short cycle, of a free end of the reed valve element with the valve main body. This causes a problem of noise.

It is therefore desirable to provide a construction in which the operation of the reed valve does not cause noise.

It is an objective of the present invention to provide an internal combustion engine of the above-mentioned type having an improved secondary air pipe arrangement and valve means arrangement so as to prolong the life of the secondary air pipe arrangement without reducing the service life of the valve means.

According to the present invention, this objective is performed in that a portion of the secondary air pipe arrangement downstream of said valve means extends inclined downwards so as to drain condensates towards said exhaust passage arrangement.

Accordingly, even when exhaust gas enters the secondary air pipe arrangement downstream from the valve means and the temperature of the exhaust gas is lowered, thereby causing the formation of condensed liquid, the condensed liquid can immediately flow down through the secondary air pipe arrangement downstream from the valve means and is directed towards the exhaust passage arrangement, where it meets the hot exhaust gas.

Therefore, the condensed liquid is prevented from accumulating in a mid-way portion of the secondary air pipe arrangement and accordingly there arises no problem regarding corrosion of the secondary air pipe arrangement even when the same is sufficiently long.

According to a preferred embodiment of the present invention, said valve means is disposed above and forwardly with respect to an engine block. Owing to this arrangement, both the valve means and the secondary air pipe arrangement downstream thereof are subjected to the air stream when the vehicle moves and can be sufficiently cooled. Accordingly, thermal expansion of the secondary air supplied via the secondary air pipe arrangement is prevented so that the density of the secondary air is maintained at a fixed value. It follows from this that a sufficient amount of secondary air can be fed to the exhaust passage arrangement in accordance with the negative pressure by pulsation of the exhaust air in the exhaust passage.

According to another preferred embodiment of the invention, the valve means includes a reed valve for preventing inverse air flow from the exhaust passage arrangement towards the upstream side of the secondary air pipe arrangement, and an air cut-off valve disposed upstream from said reed valve, for cutting off said secondary air pipe arrangement in response to engine operating conditions. Preferably, said cut-off valve is in communication with a suction port of the intake passage arrangement via a negative pressure tube for actuating said air cut-off valve in response to the suction air pressure. In a preferred embodiment, said air cut-off valve is closed during high speed/high load engine operating conditions and/or engine braking conditions, and is opened during normal, intermediate engine operating conditions.

According to yet another preferred embodiment of the invention, the valve means is spaced far apart from the engine block and the exhaust passage arrangement. Accordingly, the valve means is prevented from being heated by the exhaust gas in the exhaust passage arrangement.

According to a further preferred embodiment of the invention, the reed valve is disposed in a shielded area preventing noise radiation from said reed valve. Preferably, in case the engine is installed in a motorcycle, the reed valve is disposed within a cowling having an inner panel covering said reed valve for preventing noise radiation.

Further preferred embodiments of the invention are laid down in further dependent claims.

Hereinafter, the present invention is illustrated and explained in greater detail by means of preferred embodiments thereof and accompanying drawings, wherein:
Figure 1 is a partial side view showing a secondary air pipe arrangement of an internal combustion engine, partially in cross-section, according to a preferred embodiment of the invention, said view being a fragmentary enlarged view of figure 2,
Figure 2 is a side view of an internal combustion engine installed in a motorcycle according to the preferred embodiment of figure 1,
Figure 3 is a plan view of the secondary air pipe arrangement as shown in figure 1,
Figure 4 is a fragmentary enlarged view of a secondary air pipe with a reed valve disposed therein,
Figure 5 is an enlarged view taken along line 5-5 in figure 3,
Figure 6 is a fragmentary enlarged view of figure 1 showing the connection between a downstream portion of the secondary air pipe to a cylinder head,
Figure 7 is a fragmentary enlarged view of figure 1 showing the connection between a carburettor and a suction pipe,
Figure 8 is a view taken along line 8-8 in figure 7,
Figure 9 is a view taken along line 9-9 in figure 7, and
Figure 10 is a partial enlarged view similar to figure 1 showing another embodiment of the secondary air pipe arrangement of an internal combustion engine with an air cut valve disposed between an air cleaner and the upstream end of a secondary air pipe.

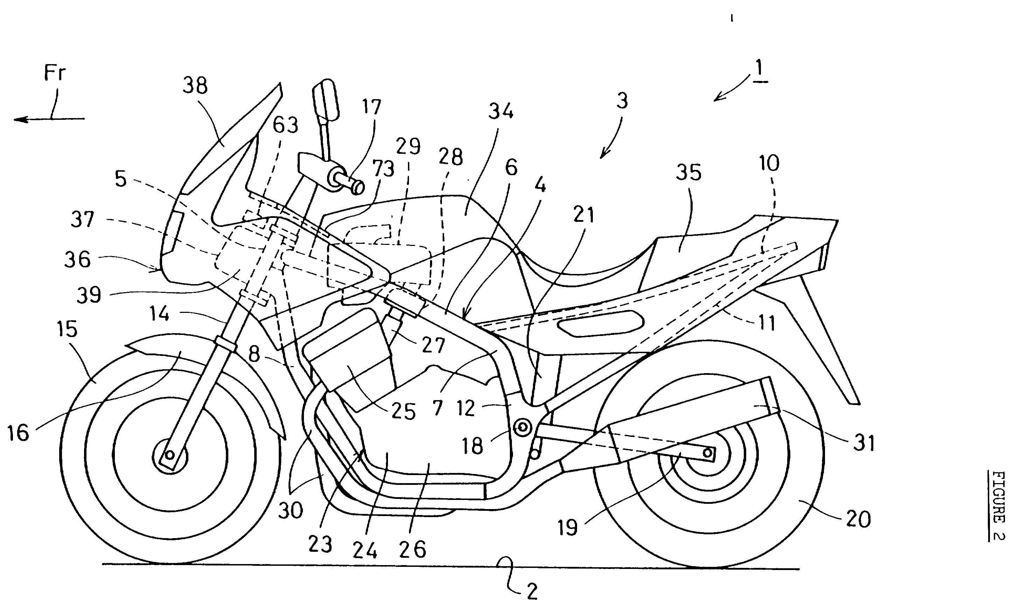

Referring to Fig. 2, the reference numeral 1 denotes a motorcycle of a saddle-type. The arrow Fr shows the direction in which the motorcycle moves forward. In the following description, "left" and "right" are directions with respect to the forward moving direction. Designated as 2 is a road surface on which the motorcycle can run.

The motorcycle 1 has a body including a body frame 4 located on the arresting side thereof. The body frame 4 has a head pipe 5 at a front end thereof from which a pair of left and right main frames 6 extend rearward and downward. Extending from the end of each of the main frames 6 is a seat pillar tube 7. From a lower portion of the head pipe 5, a pair of left and right down tubes 8 extend downward and rearward. The down tubes 8 are connected at their ends to respective ends of the seat pillar tubes 7.

The main frames 6 have their rear ends from which a pair of seat rails 10 extend rearward and upward. The seat rails 10 are supported on the seat pillar tubes 7 by a pair of left and right, back stays 11, 11. That portion at which the back stays 11 are connected to respective seat pillar tubes 7 is formed into a rear arm bracket 12.

A front fork 14 is steerably received in the head pipe 5. The front fork 14 has a lower end to which a front wheel 15 is supported. The front wheel 15 is covered from upside with a front fender 16 which is fixed in a midway of the longitudinal direction of the front fork 14. A handle 17 is mounted on an upper end of the front fork 14.

A rear arm 19 is vertically swingably pivoted on the rear arm bracket 12 by means of a supporting shaft 18. The rear arm 19 has a free end to which a rear wheel 20 is supported. A buffer 21 is disposed between the seat rail 10 and the rear arm 19.

An internal engine 23 is disposed in a space defined by the main frames 6, seat pillar tubes 7 and down tubes 8, namely in the inside of the body frame 4. The internal combustion engine 23 is a four cycle engine of a parallel multiple cylinder-type having four cylinders extending leftward and rightward. The engine has a crank case 24 and a cylinder 25 protruding forward from the crank case 24 and is detachably secured to the body frame 4 by fastening means. The crank case 24 has a rear surface provided with a driving force transmitting device 26. The transmitting device 26 has an output side operatively connected to the rear wheel 20 by means of a chain transmission mechanism.

On the rear side of the cylinder 25, there are disposed air suction pipe 27 and a carburetor 28 of each of the cylinders. The carburetors 28 are connected to a common air cleaner 29 at their upstream sides. On the front side of the cylinder 25, on the other hand, there are connected one end of an exhaust pipe 30 of each of the cylinders. The other end of the exhaust pipe 30 runs near the lower side of the down tube 8 and extends rearward to a rear end to which a silencer 31 is connected. The silencer 31 is positioned near a side of the rear wheel 20.

A fuel tank 34 is supported on the main frames 6. A fuel is supplied from the fuel tank 34 to carburetors 28. A seat 35 is supported on the seat rail 10. A front cowling 36 is provided to cover a fore side and both sides of a front portion of the body 3. The cowling 36 is supported on the head pipe 5 by a bracket 37 formed of a pipe and is constituted of a front cowl 38 covering the head pipe 5 and the handle 17 from fore side and side cowls 39 extending rearward from both sides of the front cowl 38.

Upon driving of the engine 23, the driving force is transmitted to the rear wheel 20 through the transmitting device 25, so that the motorcycle 1 can run forward on the road 2.

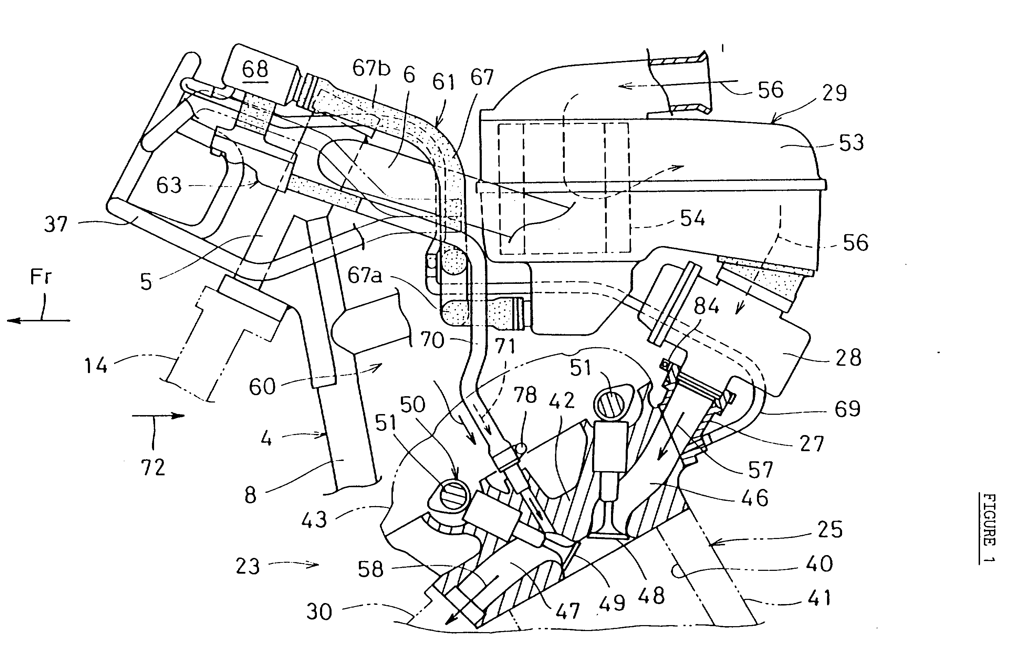

In Fig. 1, the cylinder 25 of the internal combustion engine 23 is constituted of a cylinder main body 41 having a cylinder hole 40 with a nearly vertically axis, a cylinder head 42 mounted on a protruding end of the cylinder main body 41, and a cylinder head cover covering an upper side of the cylinder head 42.

The cylinder head 42 is provided with a suction port 46 in each of the cylinders. Each suction port 46 has one end which opens to the cylinder hole 40 and the other end which is connected to the suction tube 27. The cylinder head 42 is provided with an exhaust port 47 in each of the cylinders. Each exhaust port 47 has one end which opens to the cylinder hole 40 and the other end which is connected to the exhaust pipe 30.

Air suction valve 48 is provided to open and close respective suction ports 46, whereas an exhaust valve 49 is provided to open and close respective exhaust ports 47. The suction and exhaust valves 48 and 49 are urged by springs to open the suction and exhaust ports 46 and 47, respectively. Valve operating mechanisms 50 are provided to suitably open and close the suction and exhaust valves 48 and 49. The valve operating mechanisms 50 have cam shafts 51, 51 which are engaged by the suction and exhaust valves 48 and 49.

The air cleaner 29 has a cleaner case 53 serving as an outer shell and an element 54 disposed within the cleaner case 53 to divide the inside of the cleaner case into upstream and downstream sections.

When the suction valve 48 is operated to open the suction port 46 upon the suctioning stage or the engine 23, outside air 56 is introduced into the cleaner case 53 as a result of the negative pressure in the suction port 46 and is filtered during the passage of the element 54. When the outside air 56 is passed through the carburetor 28, the fuel is supplied to form a mixed air 57 which in turn is combusted in a combustion chamber of the cylinder hole 40 during the explosion stage. This is followed by the exhausting stage wherein the exhaust valve 49 is operated to open the exhaust port 47. The exhaust gas 58 formed as a result of the combustion is discharged through the exhaust port 47.

These stages are repeated so chat the internal combustion engine 23 outputs the driving force.

### [0042]

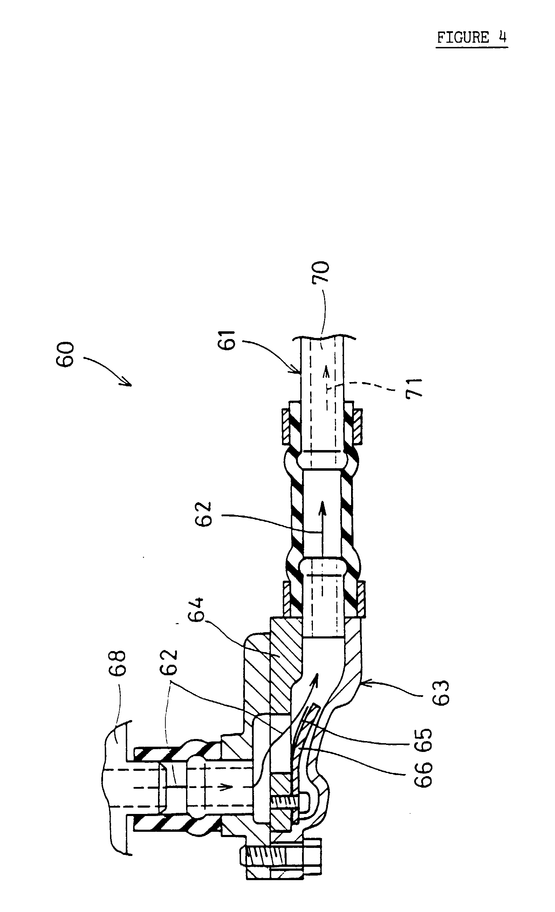

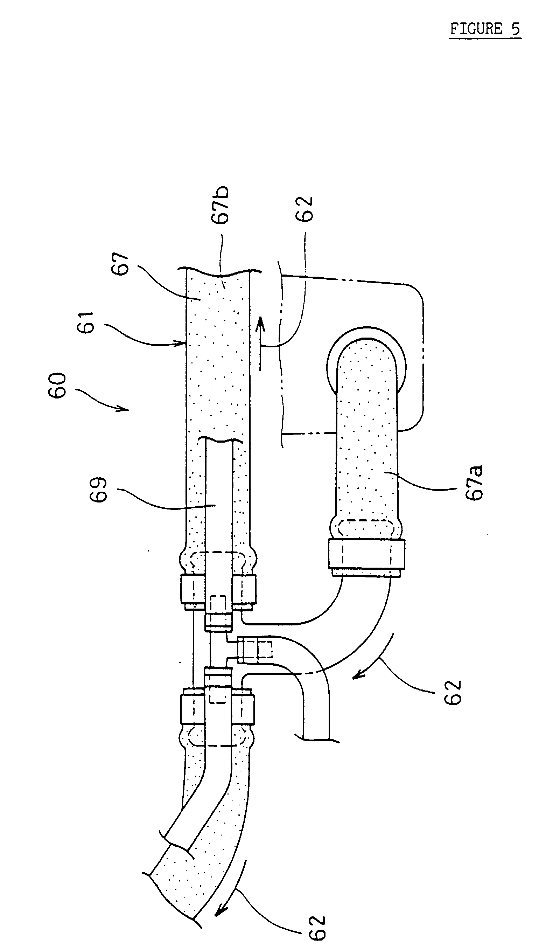

Referring to Figs. 1-6, an exhaust gas cleaning device 60 is provided to clean the exhaust gas 58 by completely combusting uncombusted substances such as HC and CO contained in the exhaust gas 58.

The exhaust gas cleaning device 60 is provided with a secondary air pipe 61 having one end connected to each of the exhaust ports 47 forming the exhaust system and the other end opening to the atmosphere. In this case, the other end of the secondary air pipe 61 is connected to the cleaner case 53 at a position downstream of the element 54 of the air cleaner 29 and opens to the atmosphere through the air cleaner 29.

A reed valve 63 is disposed in a midway of the secondary air pipe 61 in the longitudinal direction and is supported on the bracket 37. The reed valve 63 is constituted of a valve main body 64, a reed valve element 65 in the form of a plate spring disposed in the main body 64, and a stopper 66 for limiting the deflection of the reed valve element 65. The reed valve 63 permits the secondary air 62 flowing through the secondary air pipe 61 to pass therethrough only when the secondary air flows in the direction from the cleaner case 53 on the atmosphere side toward the exhaust port 47 and prevents the exhaust gas 58 from flowing backward through the secondary air pipe 61 to the cleaner case 53.

An air cut valve 68 is disposed between the reed valve 63 and the downstream end of the upstream side air pipe 67 which constitutes the portion of the secondary air pipe 61 that is located upstream of the reed valve 63. The air cut valve 68 is supported on the bracket 37.

The air cut valve 68 which serves to open and close the secondary air pipe 61, is connected to the suction port 46 by a negative pressure tube 69 which serves to transmit the negative pressure in the suction port 46 to actuate for opening and closing the air cut valve 68.

More specifically, when the negative pressure in the suction port is extremely low such as during the high speed high load operating stage of the engine or when the negative pressure in the suction port 46 is extremely high such as during the abrupt speed down stage, the air cut valve 68 is operated to close the secondary air pipe 61 by the negative pressure, so that the secondary air 62 is not fed to the exhaust gas 58. On the other hand, when the negative pressure in the suction port 46 is not extremely low or not extremely high such as during the normal driving stage, the air cut valve 68 is turned to the open position so that the secondary air 62 is capable of being fed to the exhaust gas 58.

When the air cut valve 68 is turned to the open position to open the secondary air pipe 61, the secondary air 62 is suctioned and fed to the exhaust gas 58 through the secondary air pipe 61, reed valve 63 and the air cut valve 68 in correspondence to the negative pressure by the pulsed exhaustion of the exhaust gas 58 in the exhaust port 47. Thus, the uncombusted substances such as HC and CO contained in the exhaust gas 58 are completely combusted by oxidation with the secondary air 62 so that the exhaust gas is cleaned and is discharged to the atmosphere through the exhaust tube 30 and the silencer 31.

The reed valve 63 is disposed in a front upper portion of the engine 23. A downstream side air pipe 70 which forms a portion of the secondary air pipe 61 downstream of the reed valve 63 extends gradually downward to the exhaust port 47.

The pressure within the exhaust port 47 becomes sometimes higher than that in the secondary air pipe 61 because of the pulsed exhaustion, thereby to cause the back flow of the exhaust gas 58 into the secondary air pipe 61. In this case, the back flow of the exhaust gas into the upstream side air pipe 67 is prevented by the reed valve 63. However, since the downstream side air pipe 70 is kept in fluid communication with the exhaust port 47, the exhaust gas is apt to flow back thereinto. Thus, the exhaust gas 58 is occasionally mixed with the secondary air 62 in the downstream side air pipe 70.

In this case, the temperature of the exhaust gas 58 which has entered the downstream side air pipe 70 is lowered to form a condensed liquid 71. Such a liquid 71 spontaneously flows down through the downstream side air pipe 70 and is directed to the exhaust port 47 and, thus, is treated together with the exhaust gas 58.

Therefore, the condensed liquid 71 is prevented from accumulating in a midway of the secondary air pipe 61. Thus, the secondary air pipe 61 is prevented from being corroded with the acidic condensed liquid 71.

Further, since the condensed liquid 71 does not accumulate in the downstream side air pipe 70, there arises no problem even when the secondary air pipe 61 is sufficiently long. Thus, the reed valve 63 connected to the exhaust port 47 with the secondary air pipe 61 can be located at a position spaced far apart from the exhaust port 47.

Therefore, the reed valve 63 is prevented from being heated with the exhaust gas 58 in the exhaust port 47.

Furthermore, since the reed valve 63 is mounted on a front upper portion of the internal combustion engine 23 such that the downstream side air pipe 70 which is a portion of the secondary air pipe 61 downstream of the reed valve 63 is oriented gradually downward, both the reed valve 63 and the downstream side air pipe 70 can wholly receive the running wind 72 and can be sufficiently cooled.

Therefore, thermal expansion of the secondary air 62 in the reed valve 63 and in the downstream side air pipe 70 is prevented so that the density of the secondary air is maintained at a determined value. This follows that the secondary air 62 can be fed to the exhaust port 47 in a sufficient amount corresponding to the negative pressure by pulsation of the exhaust air 58 in the exhaust port 47.

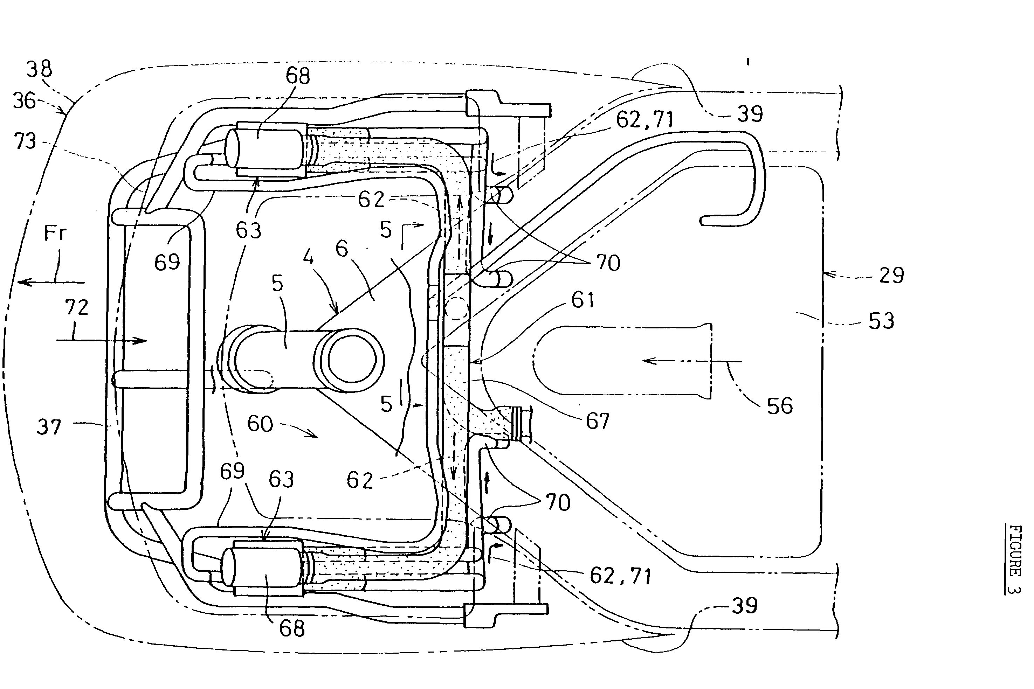

In Figs. 2 and 3, an inner panel 73 is provided inside of the cowling 36 and rearwardly nearly horizontally protrudes from a middle part of the height of the cowling 36. The reed valve 63 is disposed in a shielded area preventing noise radiation, more particularly it is disposed inside the cowling 36 and below the inner panel 73 which represent a shielding element, said inner panel being disposed to cover a speed meter and like instruments from the upper side thereof.

By this expedient, even when the reed valve 63 generates hitting sounds upon operation thereof to permit the passage or the secondary air 62 by repeated collision, in a short cycle, of a free end of the reed valve element 65 with the valve main body 64, the sounds are prevented from being directed outside of the body by the cowling 36. Further, the inner panel 73 prevents the sounds generated by the reed valve 63 from directing to the rider. The inner panel 73 also hides the reed valve 63 from the view of the rider. Thus, the above construction is preferable from the standpoint of appearance and prevention of noise.

The downstream end of the secondary air pipe 61 can be connected to the exhaust pipe 30 constituting the exhaust system of the engine 23.

The structure of the exhaust gas cleaning device 60 will be described in more detail with reference to Figs. 1-5.

There are provided a pair of left and right reed valves 63 and a pair of left and right air cut valves 68, with the left valves 63 and 68 and right valves 63 and 68 being connected to each other, respectively. The upstream side pipe 67 includes a first air pipe 67a extending from the cleaner case 53 and a pair of second air pipes 67b and 67b branched from the end of the first air pipe 67a. To the end of each of the second air pipes 67b is connected the corresponding air cut valve 68. Each of the first and second air pipes 67a and 67b is formed from a flexible tube.

There are provided four downstream side air pipes 70. Two downstream side air pipes 70 extend from each of the reed valves 63, with the end of each of the pipes 70 being connected the exhaust port 47 of each of the cylinders. The downstream side air pipes 70 are each formed from a metal tube.

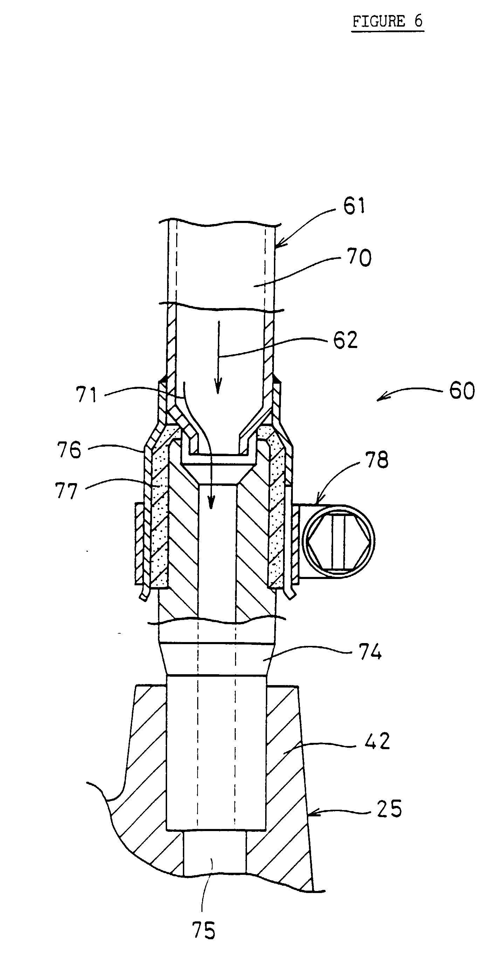

The structure of the portion at which the downstream side air pipe 70 is connected to the exhaust port 47 will be described with reference to Figs. 1 and 6.

From the cylinder head 42 adjacent to the exhaust port 47, a connecting pipe 74 protrudes upward. The connecting pipe 74 is in fluid communication with the exhaust port 47 through a passage 75 formed in the cylinder head 42.

The downstream side air pipe 70 has a lower end portion having a reduced cross sectional area and inserted into an upper end of the connecting pipe 74. The downstream side air pipe 70 has a lower part fitted into and connected to an upper end of a large diameter pipe 76. The large diameter pipe 76 has a lower end into which the protruded portion of the connecting pipe 74 is fitted. A cylindrical gasket 77 is interposed between the connecting pipe 74 and the large diameter pipe 76. The large diameter pipe is detachably connected to the connecting pipe 74 through the gasket 77 by a band 78 fitted around the large diameter pipe 76.

According to the above construction, the condensed liquid which has flowed down through the downstream side air pipe 70 is smoothly passed through the connecting pipe 74 and the passage 75 to the exhaust port 47 without flowing into the gasket 77. Thus, the above construction can prevent the corrosion of the gasket by the condensed liquid 71 and the leakage of the condensed liquid 71 through the gasket 77 to outside of the secondary air pipe 61.

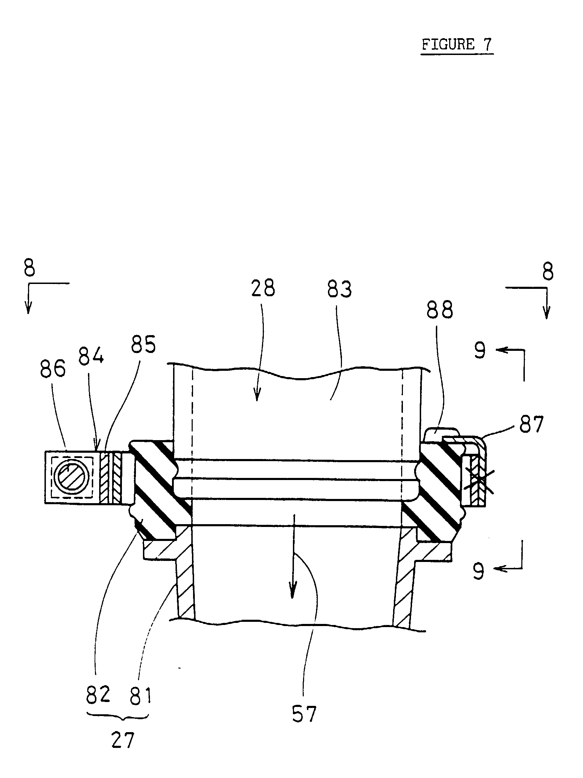

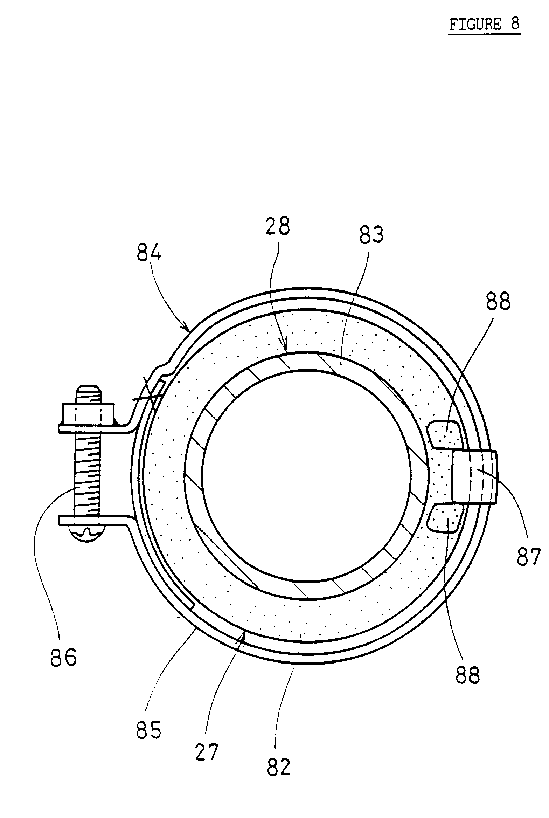

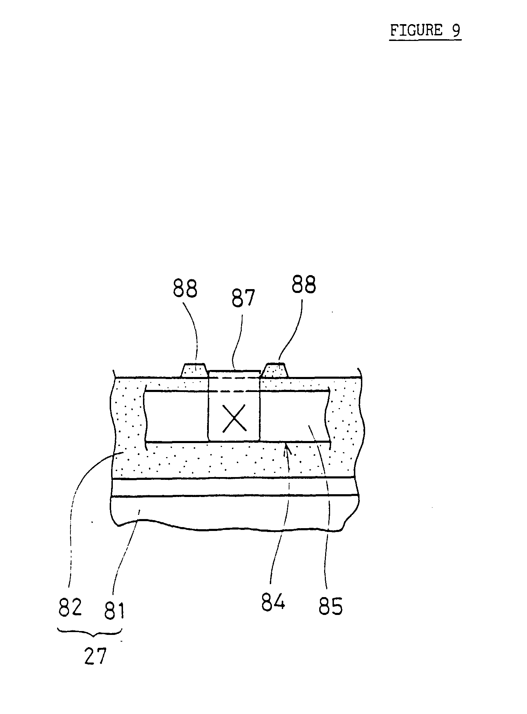

The structure of the portion at which the suction pipe 27 is connected to the carburetor 28 will be described with reference to Figs. 7-9.

The suction pipe 27 is constituted of a metallic suction pipe main body 81 mounted on the cylinder head 42 and a rubber, elastic cylindrical body 82 vulcanized and bonded to a protruded portion of the main body 81. A connecting pipe 83 which constitutes a downstream end of the carburetor 28 is fitted into the cylindrical body 82. The cylindrical body 82 and the connecting pipe 83 are detachably tightly connected by a band 84 provided around the cylindrical body 82.

The band 84 includes an annular band main body 85, a fastener 86 for attracting the both ends of the band main body 85, and an engaging member 87 protruding from a portion of the circumference of the main body 85. The engaging member 87 has a protruding end disengageably received on an upper surface of the cylindrical body 82. Also provided integrally on the upper surface of the cylindrical body 82 are a pair of protrusions 88, 88 between which the engaging member 87 is sandwiched along the circumferential direction of the suction pipe 27.

The cylindrical body 82 and the connecting pipe 83 are connected by the band 84 as follows.

The band 84 is first fitted around the cylindrical body 82, with the protruding end of the engaging member 87 being placed on the cylindrical body 82 at a position between the protrusions 88 and 88. The band 84 is thus not only prevented from freely rotating about the axis of the cylindrical body 82 by the protrusions 88 and 88 but also prevented from sliding downward below the cylindrical body 82.

The connecting pipe 83 is then inserted into the cylindrical body 82 and the fastening member 86 is operated to fasten the band 84.

With the band 84 thus constructed, the position of the band 84 in the cicumferential and vertical direction of the suction pipe 27 can be determined by the engaging member 87 and the protrusions 88 and 88, so that an desirable displacement of the band 84 during the operation of the fastening member 86 is prevented, thereby improving the workability.

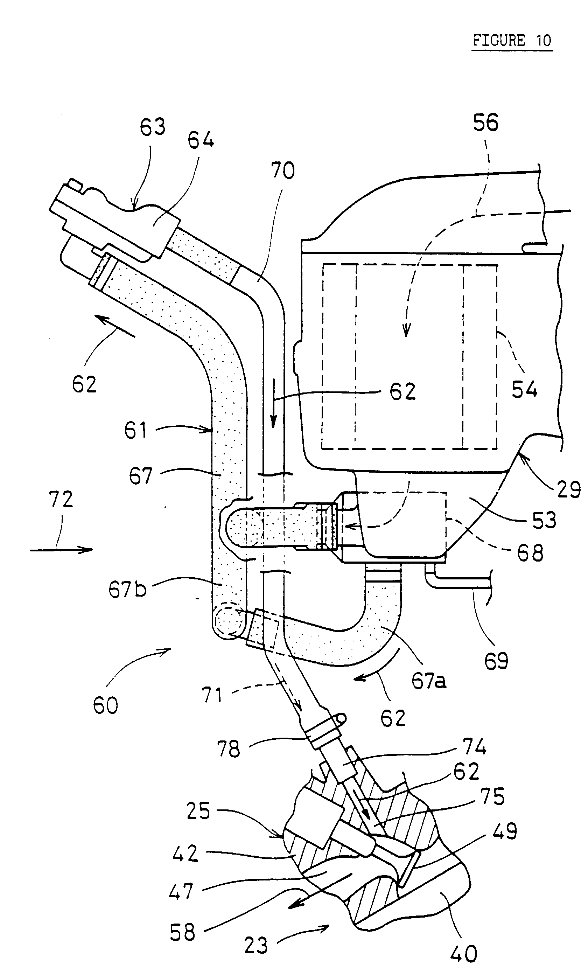

Fig. 10 depicts a modified embodiment of the exhaust gas cleaning device 60.

According to this embodiment, the air cut valve 68 is interposed between the cleaner case 53 and the upstream end of the upstream side air pipe 67 of the secondary air pipe 61.

Since the other construction and function are the same as the above embodiment, explanation is not repeated here. The same reference numerals are denoted in the drawings.

According to the described embodiments, a reed valve is mounted on a front upper portion of an internal combustion engine such that that portion of a secondary air pipe which extends downstream of the reed valve upto an exhaust system is oriented gradually downward.

By this expedient, even when the temperature of an exhaust gas which has entered the secondary air pipe downstream of the reed valve is lowered to cause the formation of a condensed liquid, the condensed liquid can spontaneously flow down through the secondary air tube in the downstream of the reed valve and is directed to the exhaust system and is treated together with the exhaust gas.

Therefore, the condensed liquid is prevented from accumulating in a midway of the secondary air pipe. Thus, the secondary air pipe is prevented from being corroded with the acidic condensed liquid, attaining an improvement of the service life of the secondary air pipe.

Further, since the condensed liquid does not accumulate in the secondary air pipe in downstream of the reed valve, there arises no problem even when the secondary air pipe is sufficiently long. Thus, the reed valve connected to the exhaust exhaust system with the secondary air pipe can be located at a position spaced far apart from the exhaust system.

Therefore, the reed valve is prevented from being heated with the exhaust gas in the exhaust system.

Furthermore, since the reed valve is mounted on a front upper portion of the internal combustion engine such that that portion of the secondary air pipe which extends downstream of the reed valve upto the exhaust port system is oriented gradually downward, both the reed valve and the secondary air pipe located downstream thereof can wholly receive the running wind and can be sufficiently cooled.

Therefore, thermal expansion of the secondary air in the reed valve and in the secondary air pipe in the downstream thereof is prevented so that the density of the secondary air is maintained at a determined value. This follows that the secondary air can be fed to the exhaust system in a sufficient amount corresponding to the negative pressure created by pulsation of the exhaust air in the exhaust system.

In the above case, the reed valve may be disposed inside a cowling which is disposed to cover a front portion of the body from the front side and both sides thereof.

By this expedient, even when the reed valve generates hitting sounds upon operation thereof to permit the passage of the secondary air by repeated collision, in a short cycle, of a free end of the reed valve element with the valve main body, the sounds are prevented from being directed outside of the body by the cowling.

Therefore, the operation of the reed valve does not result in the generation of noise.

## Claims

1. Internal combustion engine, particularly for a motorcycle, comprising a cylinder (25) with a combustion chamber defined therein, an intake passage arrangement (46) for supplying intake air to said combustion chamber, and an exhaust passage arrangement (47) for discharging combustion gas from said combustion chamber, a secondary air pipe arrangement (61) for supplying air to said exhaust passage arrangement to clean said combustion gas, and valve means (63, 68) for opening and closing said secondary air pipe arrangement (61), **characterized in that** the portion (70) of said secondary air pipe arrangement (61) downstream of said valve means (63) extends inclined downwards so as to drain condensates (71) towards said exhaust passage arrangement (47).

2. Internal combustion engine according to claim 1, **characterized in that** said valve means (63, 68) is disposed above and forwardly with respect to an engine block.

3. Internal combustion engine according to claim 1 or 2, **characterized in that** an upstream end of the secondary air pipe arrangement (61) is communicated with an air cleaner unit (29) associated with the intake passage arrangement, and the downstream end of said secondary air pipe arrangement (61) opens into an exhaust passage (47) in the vicinity of an opening thereof communicating with the combustion chamber.

4. Internal combustion engine according to at least one of claims 1 to 3, **characterized in that** said valve means includes a reed valve (63) for preventing inverse air flow from the exhaust passage arrangement (47) towards the upstream side of the secondary air pipe arrangement (61), and an air cutoff valve (68) disposed upstream from said reed valve (63), for cutting off said secondary air pipe arrangement (61) in response to engine opening conditions.

5. Internal combustion engine according to claim 4, **characterized in that** said cutoff valve (68) is communication with a suction port (46) of the intake passage arrangement via a negative pressure tube (69) for actuating said air cutoff valve (68) in response to the suction air pressure.

6. Internal combustion engine according to claim 4 or 5, **characterized in that** said air cutoff valve (68) is closed during high speed/high load engine operating conditions and/or engine breaking conditions, and is opened during normal, intermediate engine operating conditions.

7. Internal combustion engine according to at least one of claims 1 to 6, **characterized in that** the secondary air pipe arrangement (61) comprises a pair of upstream side air pipes (67b) communicated with the air cleaner unit (29), with a reed valve (63) associated with each of said upstream side air pipes (67b), and a plurality of downstream side air pipes (70) extending from each of said reed valves (68) to the exhaust passage (47) of associated cylinders.

8. Internal combustion engine according to at least one of claims 4 to 7, **characterized in that** the reed valve (68) is disposed in a shielded area preventing noise radiation from said reed valve (63).

9. Internal combustion engine according to claim 8, **characterized in that** the reed valve (63) is disposed within a cowling (36) having an inner panel (73) covering said reed valve (63) for preventing noise radiation.

10. Internal combustion engine according to at least one of claims 7 to 9, **characterized in that** each downstream side air pipe (70) of the secondary air pipe arrangement (61) is connected to a connecting pipe (74) extending upwards from a cylinder head (42) and communicated with the exhaust passage (47) formed therein, a gasket (77) being provided for sealing the connection between said downstream side air pipe (70) and said connecting pipe (74), wherein said downstream side air pipe (70) has an end portion with a reduced diameter inserted into said connecting pipe (74).

11. Internal combustion engine according to at least one of claims 1 to 10, **characterized in that** said valve means (63) is spaced far apart from the engine block and the exhaust passage arrangement (47).

## Patentansprüche

1. Brennkraftmaschine, insbesondere für ein Motorrad, mit einem Zylinder (25) mit einer darin definierten Verbrennungskammer, eine Einlaßkanalanordnung (46) zur Zuführung von Einlaßluft zu der Verbrennungskammer, und einer Auslaßkanalanordnung (47) zum Abführen von Verbrennungsgas aus der Verbrennungskammer, eine Nebenluftrohranordnung (61) zur Zuführung von Luft zu der Auslaßkanalanordnung, um das Verbrennungsgas zu reinigen, und einer Ventileinrichtung (63, 68) zum Öffnen und Schließen der Nebenluftrohranordnung (61), **dadurch gekennzeichnet,** daß der Teil (70) der Nebenluftrohranordnung (61) stromab der Ventileinrichtung (63) sich geneigt nach unten erstreckt, um Kondensate (71) in Richtung zu der Auslaßkanalanordnung (47) abzuführen.

2. Brennkraftmaschine nach Anspruch 1, **dadurch gekennzeichnet,** daß die Ventileinrichtung (63, 68) oberhalb und vornliegend in Bezug auf einen Motorblock angeordnet ist.

3. Brennkraftmaschine nach Anspruch 1 oder 2, **dadurch gekennzeichnet,** daß ein stromaufwärtiges Ende der Nebenluftrohranordnung (61) mit einer Luftreinigereinheit (29) verbunden mit der Einlaßkanalanordnung kommunizierend verbunden ist, und sich das stromabwärtige Ende der genannten Nebenluftrohranordnung (61) in einen Auslaßkanal (47) in der Nähe einer Öffnung derselben öffnet, die mit der Verbrennungskammer kommuniziert.

4. Brennkraftmaschine nach zumindestens einem der Ansprüche 1 bis 3, **dadurch gekennzeichnet,** daß die Ventileinrichtung ein Klappenventil (63) enthält, um eine umgekehrte Luftströmung von der Auslaßkanalanordnung (47) in Richtung der stromaufseitigen Seite der Nebenluftrohranordnung (61) zu verbinden, und ein Luftabsperrventil (68), angeordnet stromauf des Klappenventiles (63), um in Abhängigkeit von Motorbetriebsbedingungen die Nebenluftrohranordnung (61) abzusperren.

5. Brennkraftmaschine nach Anspruch 4, **dadurch gekennzeichnet,** daß das Absperrventil (68) mit einer Ansaugöffnung (46) der Einlaßkanalanordnung über ein Unterdruckrohr (69) zum Betätigen des Absperrventiles (68), in Abhängigkeit von dem Ansaugluftdruck, kommunizierend verbunden

6. Brennkraftmaschine nach Anspruch 4 oder 5, **dadurch gekennzeichnet,** daß das Luftabsperrventil (68) während hohen Drehzahl-/Hochlast-Motorbetriebsbedingungen und /oder Motorbremsbedingungen geschlossen ist, und während normaler, mittlerer Motorbetriebsbedingungen geöffnet ist.

7. Brennkraftmaschine nach zumindestens einem der Ansprüche 1 bis 6, **dadurch gekennzeichnet,** daß die Nebenluftrohranordnung (61) ein Paar stromaufseitiger Luftrohre (67b) aufweist, die mit der Luftreinigereinheit (29) kommunizieren, mit einem Klappenventil (63) zugeordnet jedem der stromaufseitigen Luftrohre (67b), und mit einer Vielzahl von stromabseitigen Luftrohren (70), die sich von jedem der Klappenventile (68) zu dem Auslaßkanal (47) der zugehörigen Zylinder erstrecken.

8. Brennkraftmaschine nach zumindestens einem der Ansprüche 4 bis 7, **dadurch gekennzeichnet,** daß das Klappenventil (68) in einem abgeschirmten Gebiet zur Verhinderung der Lärmabstrahlung des Klappenventiles (63) angeordnet ist.

9. Brennkraftmaschine bezüglich zu Patentanspruch 8, **dadurch gekennzeichnet,** daß das Klappenventil in einer Verkleidung (36) angebracht wird, die eine innere Tafelfläche (73) zum Abdecken des Klappenventils (63), zur Vermeidung der Lärmabstrahlung aufweist.

10. Brennkraftmaschine nach zumindestens einem der Ansprüche 7 bis 9, **dadurch gekennzeichnet**, daß jedes stromabseitige Luftrohr (70) der Nebenluftrohranordnung (61) mit einem Verbindungsrohr (74), das sich von einem Zylinderkopf (42) nach oben erstreckt und mit dem darin gebildeten Auslaßkanal (47) kommuniziert, eine Dichtungsmanschette (77) vorgesehen zum Abdichten der Verbindung zwischen stromabseitigen Luftrohr (70) und dem Verbindungsrohr (74), wobei das stromabseitige Luftrohr (70) einen Endabschnitt mit einem reduzierten Durchmesser aufweist, eingesetzt in das Verbindungsrohr (74).

11. Brennkraftmaschine nach zumindestens einem der Ansprüche 1 bis 10**, dadurch gekennzeichnet,** daß die Ventileinrichtung (63) räumlich weit entfernt vom Motorblock und der Auslaßkanalanordnung (47) angeordnet ist.

## Revendications

1. Moteur à combustion interne, en particulier pour un motocycle, comprenant un cylindre (25) ayant, définie en son sein une chambre de combustion, un agencement de passage d'admission (46) pour fournir de l'air d'admission à ladite chambre de combustion, et un agencement de passage d'échappement (47) pour décharger les gaz de combustion issus de ladite chambre de combustion, un agencement de tube d'air secondaire (61) pour fournir de l'air audit agencement de passage d'échappement, afin d'épurer lesdits gaz de combustion, et des moyens formant valve (63, 68) prévus pour ouvrir et fermer ledit agencement de tube d'air secondaire (61), caractérisé en ce que la partie (70) dudit agencement du tube d'air secondaire (61), en aval desdits moyens formant valve (63) s'étend sous une inclinaison orientée vers le bas, de manière à drainer les condensats (71) vers ledit agencement de passage d'échappement (47).

2. Moteur à combustion interne selon la revendication 1, caractérisé en ce que lesdits moyens formant valve (63, 68) sont disposés au-dessus et à l'avant par rapport au bloc moteur.

3. Moteur à combustion interne selon la revendication 1 ou 2, caractérisé en ce qu'une extrémité amont de l'agencement de tube d'air secondaire (61) est mise en communication avec une unité de filtrage d'air (29), associée à l'agencement de passage d'admission, et l'extrémité aval dudit agencement de tube d'air secondaire (61) débouche dans un passage d'échappement (47), proche d'une ouverture de celui-ci, communiquant avec la chambre de combustion.

4. Moteur à combustion interne selon au moins l'une des revendications 1 à 3, caractérisé en ce que lesdits moyens formant valve comprennent une valve à lame (63) pour empêcher un flux d'air inverse depuis l'agencement de passage d'échappement (47) vers le côté amont de l'agencement de tube d'air secondaire (61), et une valve d'isolement (68) disposée en amont de ladite valve à lame (63), afin d'isoler ledit agencement de tube d'air secondaire (61) en réponse aux conditions de fonctionnement du moteur.

5. Moteur à combustion interne selon la revendication 4, caractérisé en ce que ladite valve d'isolement (68) est en communication avec un orifice d'aspiration (46) de l'agencement de passage d'admission, via un tube à pression négative (69), afin d'actionner ladite valve d'isolement (68) en réponse à la pression d'air d'aspiration.

6. Moteur à combustion interne selon la revendication 4 ou 5, caractérisé en ce que ladite valve d'isolement (68) est fermée durant des conditions de fonctionnement moteur à haute vitesse/haute charge et/ou des conditions de frein moteur, et est ouverte durant des conditions de fonctionnement moteur normales, intermédiaires.

7. Moteur à combustion interne selon au moins l'une des revendications 1 à 6, caractérisé en ce que l'agencement de tube d'air secondaire (61) comprend une paire de tubes d'air de côté amont (67b), mis en communication avec l'unité de filtre à air (29), via une valve à lame (63) associée à chacun desdits tubes d'air de côté amont (67b), et une pluralité de tubes d'air de côté aval (70) s'étendant depuis chacune desdites valves à lame (63) vers le passage d'échappement (47) des cylindres associés.

8. Moteur à combustion interne selon au moins l'une des revendications 4 à 7, caractérisé en ce que la valve à lame (63) est disposée dans une zone isolée, empêchant tout rayonnement de bruit depuis ladite valve à lame (63).

9. Moteur à combustion interne selon la revendication 8, caractérisé en ce que la valve à lame (63) est disposée dans un capotage (36) ayant un panneau intérieur (73) couvrant ladite valve à lame (63) pour empêcher le rayonnement de bruit.

10. Moteur à combustion interne selon au moins l'une des revendications 7 à 9, caractérisé en ce que chaque tube d'air de côté aval (70) de l'agencement de tube d'air secondaire (61) est connecté à un tube de liaison (74) s'étendant en amont depuis une culasse (42) et mis en communication avec le passage d'échappement (47) y étant formé, un joint d'étanchéité (77) étant prévu pour isoler de façon étanche la liaison entre ledit tube d'air de côté aval (70) et ledit tube de liaison (74), dans lequel ledit tube d'air de côté aval (70) a une partie d'extrémité d'un diamètre réduit, insérée dans ledit tube de liaison (74).

11. Moteur à combustion interne selon au moins l'une des revendications 1 à 10, caractérisé en ce que lesdits moyens formant valve (63) sont espacés à grande distance du bloc moteur et de l'agencement de passage d'échappement (47).
